## Europäisches Patentamt

## European Patent Office

## Office européen des brevets

(19)

(11) Veröffentlichungsnummer: **0 006 620**
**B1**

(12) **EUROPÄISCHE PATENTSCHRIFT**

(45) Veröffentlichungstag der Patentschrift:
21.04.82

(21) Anmeldenummer: **79102154.6**

(22) Anmeldetag: **28.06.79**

(51) Int. Cl.³: **C 08 L 23/12,** C 08 L 23/06,
C 08 L 23/16

(54) Verfahren zum Herstellen einer Polypropylen-Formmasse.

(30) Priorität: **30.06.78 DE 2828763**

(43) Veröffentlichungstag der Anmeldung:
**09.01.80 Patentblatt 80/1**

(45) Bekanntmachung des Hinweises auf die Patenterteilung:
**21.04.82 Patentblatt 82/16**

(84) Benannte Vertragsstaaten:
**BE DE FR GB IT NL**

(56) Entgegenhaltungen:
**CH-A-594 013**
**DE-A-2 152 746**
**DE-A1-2 417 093**
**GB-A-1 065 568**
**GB-A-1 154 447**
**US-A-3 256 367**
**US-A-3 515 775**

(73) Patentinhaber: **HOECHST AKTIENGESELLSCHAFT,**
**Postfach 80 03 20, D-6230 Frankfurt/Main 80 (DE)**

(72) Erfinder: **Kloos, Friedrich, Dr., Südring 112, D-6500 Mainz (DE)**
Erfinder: **Leugering, Hans Joachim, Dr., Kanalstrasse 3, D-8261 Burgkirchen/Alz (DE)**

## Verfahren zum Herstellen einer Polypropylen-Formmasse

Die Erfindung betrifft ein Verfahren zur Herstellung einer thermoplastischen Formmasse auf Basis von Polypropylen und einem kautschukartigen Äthylen-Propylen-Mischpolymerisat plus Polyäthylen.

Polypropylen besitzt neben einigen sehr günstigen Eigenschaften, wie beispielsweise einer relativ niedrigen Dichte, einer ausgezeichneten Beständigkeit gegen höhere Temperaturen und wäßrigen und nichtwäßrigen Flüssigkeiten, auch weniger günstige Eigenschaften, wozu die mangelhafte Schlagfestigkeit bei Temperaturen unterhalb Raumtemperatur, insbesondere unterhalb 0° C, zu zählen ist. Ausreichende Schlagfestigkeit ist insbesondere für Transportkästen, Koffer, Automobilteile und ähnliche Anwendungen wichtig. Polyäthylen hoher Dichte, aus welchem man derartige Formteile gewöhnlich herstellt, besitzt zwar eine gute Schlagfestigkeit, zeigt jedoch eine geringere Beständigkeit gegen hohe Temperaturen und eine ungenügende Festigkeit gegen Rißbildung.

Es ist bekannt, Gemische aus Polypropylen und Polyäthylen zu verwenden. Es hat sich aber gezeigt, daß Mischungen dieser Polymeren eine kaum verbesserte Schlagfestigkeit im Vergleich zum Polypropylen besitzen. Außerdem neigen aus derartigen Mischungen hergestellte Formkörper dazu, bereits bei geringem Durchbiegen undurchsichtig und matt zu werden.

Ferner hat man Polypropylen zur Verbesserung der Schlagfestigkeit bei Temperaturen unterhalb Raumtemperatur mit amorphen Copolymeren von Äthylen und Propylen, aber auch mit anderen kautschukartigen Polymeren, z. B. Polyisobutylen, vermischt. Indessen sind Zugfestigkeit und Steifigkeit derartiger Mischungen nicht ausreichend.

Weiterhin ist bekannt, Polypropylen mit Polyäthylen und einer kautschukartigen Komponente zu mischen (vgl. GB-PS 1 154 447, GB-PS 1 065 566 und US-PS 3 256 367). Solche ternären Mischungen zeigen gegenüber binären Mischungen bessere Eigenschaften. Sie können mittels bekannter Methoden hergestellt werden, beispielsweise durch gleichzeitiges Kneten der Komponenten in Zweiwellenknetern, auf Walzwerken und in Extrudern. Dabei wird auch die sog. »Masterbatch-Technik« angewendet, d. h. die beiden in geringeren Anteilen in der Formmasse vorhandenen Polymeren, Polyäthylen und kautschukartige Komponente, werden zunächst für sich homogen gemischt und danach mit der vorgesehenen Menge Polypropylen vermischt (vgl. US-PS 3 256 367).

Ebenso bekannt ist auch ein Verfahren, bei welchem eine Lösung eines Polymergemisches hergestellt und danach das Lösungsmittel durch eine Schnellverdampfung entfernt wird. (vgl. DE-OS 2 152 746). Bei diesem Verfahren ist jedoch der Aufwand für Lösungsmittel sehr erheblich und damit für eine großtechnische Anwendung nicht geeignet.

Die Herstellung solcher schlagfester thermoplastischer Formmassen auf Basis von Polypropylen durch Polymerisation scheitert daran, daß dabei oft sehr hohe Anteile an löslichen Polymeren entstehen, wodurch hohe Monomerverluste auftreten.

Ein Nachteil der bisher bekannten Verfahren zur Herstellung ternärer schlagfester Polypropylen-Formmassen besteht darin, daß optimal schlagfeste Formmassen nur zufällig oder mit großem Versuchsaufwand erhalten werden.

Es wurde nun gefunden, daß man mit einfachen Mitteln eine optimal schlagfeste, ternäre Polypropylen-Formmasse erhalten kann, wenn man ein bestimmtes Verhältnis des Schmelzindex von Polypropylen zu dem der Polyäthylen — kautschukartiges Material — Mischung einhält.

Gegenstand der Erfindung ist somit das in den Ansprüchen genannte Verfahren.

Gemäß dem erfindungsgemäßen Verfahren werden zunächst ein Polyäthylen und ein kautschukartiges Material miteinander homogen gemischt und die entstandene Mischung mit einem geeigneten Polypropylen vermischt.

Als Polyäthylen geeignet sind Äthylenhomopolymerisate und Copolymerisate mit bis zu 10 Gew.-% eines 1-Olefins mit 3 bis 6 Kohlenstoffatomen, beispielsweise Propylen, Buten-1, Penten-1, Hexen-1.

Die Dichte dieser Polymeren beträgt 0,91 bis 0,97 g/cm$^3$ und der Schmelzindex MFI (190/5) 0,1 bis 20, vorzugsweise 0,1 bis 10 g/10 min.

Das kautschukartige Material ist ein statistisches Mischpolymerisat aus 30 bis 80 Gew.-% Äthylen und 20 bis 70% Propylen, vorzugsweise 40 bis 65 Gew.-% Äthylen und 35 bis 60 Gew.-% Propylen. Bis zu 10 Gew.-%, bezogen auf die Gesamtmenge der Monomeren, eines oder mehrerer anderer Comonomere, welche wenigstens zwei nichtkonjugierte C—C-Bindungen enthalten, können einpolymerisiert sein. Beispiele für die letztgenannte Monomeren sind Äthylennorbonen, Dicyclopentadien, 1,4-Hexadien.

Die Dichte dieser Mischpolymerisate beträgt 0,85 bis 0,89 g/cm$^3$, der MFI (230/5) 0,05 bis 10, vorzugsweise 0,1 bis 6 g/10 min.

Für das Verfahren eignen sich Propylenhomopolymerisate und Copolymerisate mit bis zu 15 Gew.-% eines 1-Olefins mit 2 bis 6 Kohlenstoffatomen, beispielsweise Äthylen, Buten, Hexen.

Diese Polymeren weisen eine Dichte von 0,89 bis 0,92 g/cm$^3$ und einen MFI (230/5) von 0,5 bis 25, vorzugsweise 0,5 bis 15 g/10 min auf.

Für die Herstellung der Mischung aus dem Polyäthylen und dem Kautschukmaterial eignen sich alle Kneter, Walzwerke u. dgl., die in der Lage sind, die beiden Komponenten fein zu zerteilen und ineinander zu verteilen. Derartige Kneter sind beispielsweise sogenannte Innenmischer, wie sie in der Gummiindustrie verwendet werden. Diese Maschinen bestehen aus einem beheizbaren Mantelgehäuse, in welchem sich besonders geformte Schaufeln gegeneinander drehen, wobei der Füllschacht durch einen Druckstempel verschlossen wird. Ein weiteres Beispiel sind Zweiwellenkneter, welche den Extrudern ähnlich sind und ebenfalls aus einem beheizbaren Mantelgehäuse bestehen, in welchem sich die Schaufeln gegeneinander drehen, das Material durchkneten und vom Füllschacht zum Auswurf fördern. Geeignete Mischmaschinen sind beispielsweise auch die in der Gummiindustrie und in der PVC-verarbeitenden Industrie verwendeten Zweiwalzwerke, bei denen sich zwei beheizte Walzen mit unterschiedlicher Geschwindigkeit gegeneinander drehen und das aufgegebene Material im Walzenspalt plastizieren und homogenisieren.

Das Mischen und Homogenisieren erfolgt bei einer Temperatur, die abhängig von der gewählten Maschinentype ist, im allgemeinen jedoch im Bereich von 150 bis 280, vorzugsweise 170 bis 240° C liegt. Die Mischzeit ist maschinenabhängig und beträgt 0,5 bis 15 min, vorzugsweise 1 bis 10 min.

Das Mischungsverhältnis Polyäthylen zu Kautschukkomponente beträgt 6 : 1 bis 0,3 : 1, vorzugsweise 4 : 1 bis 0,5 : 1 (Gewichtsteile).

An der entstandenen Kautschukmischung wird der Schmelzindex MFI (230/5)-KM gemessen. Er liegt im Bereich von 0,05 bis 10, vorzugsweise von 0,1 bis 6 g/10 min. Entsprechend dem gefundenen Wert wird ein Polypropylen derart ausgewählt, daß dessen MFI (230/5)-PP zum MFI-KM im folgenden Verhältnis steht:

$$\frac{\text{MFI } (230/5) - \text{PP}}{\text{MFI } (230/5) - \text{KM}} = 2 \text{ bis } 15, \text{ vorzugsweise } 3 \text{ bis } 8.$$

Selbstverständlich ist es auch möglich, die umgekehrte Reihenfolge zu wählen und zu einem gegebenen Polypropylen eine geeignete Kautschukmischung zu wählen. Dazu bedarf es nur einiger kleiner Versuche, um den gewünschten MFI (230/5)-KM zu erhalten.

Polypropylen und Kautschukmischung werden im Verhältnis 1,5−9 : 1, vorzugsweise 2−8 : 1 unter Zusatz der üblichen Stabilisatoren, Antioxidantien, Pigmente, Füllstoffe, Gleitmittel, etc. gemischt und granuliert. Für das Mischen sind die üblichen Mischer geeignet, granuliert wird auf einem der bekannten Granulierextruder, welche meist Doppelschneckenpressen mit Misch- und Knetzonen darstellen.

Die auf diese Weise hergestellte Polypropylen-Formmasse besteht aus 90 bis 60, vorzugsweise 80 bis 70 Gew.-% Polypropylen, 4 bis 30, vorzugsweise 6 bis 24 Gew.-% Polyäthylen und 6 bis 30, vorzugsweise 6 bis 24 Gew.-% des kautschukartigen Mischpolymerisats aus Äthylen und Propylen, welches gegebenenfalls ein oder mehrere weitere Comonomere enthalten kann. Die Polymeren sind weiter obenstehend definiert.

Die erfindungsgemäß hergestellte Polypropylen-Formmasse zeichnet sich durch eine sehr gute Schlagfestigkeit bei Temperaturen unterhalb Raumtemperatur, insbesondere unterhalb 0° C aus.

Für die Prüfung der Formmassen werden die folgenden Methoden angewendet:

| | Dimension | |
|---|---|---|
| MFI (230/5) | g/10 min | DIN 53 735 |
| Kugeldruckhärte | | DIN 53 456 |
| 30 sec-Wert | N/mm² | Prüfkraft 132,4 N bzw. 358,1 N |
| Kerbschlagzähigkeit $a_{KV}$ | mJ/mm² | DIN 53 453 |
| Plattenfalltest | cm | Auf die eingespannte Platte fällt ein Fallgewicht von 1 kg mit einem Dorn von 12 mm Durchmesser. Gemessen wird die Höhe, bei welcher 50% der Platten nicht zerstört werden |

Beispiel 1 mit Vergleichsbeispiel A

In einem Zweiwellenkneter (Doppelschneckenpresse) mit einem Schneckendurchmesser D von 35 mm, einer Schneckenlänge L von 17 D und einem am Zylinderanfang angeordneten Mischteil werden bei einer Zylindertemperatur von 230° C zwei Teile eines Äthylen-Propylen-Mischpolymerisats bestehend aus 44 Gew.-% Äthylen-Einheiten und 56 Gew.-% Propylen-Einheiten, mit einem RSV-Wert von 3,03 dl/g und einem MFI (230/5) von 1,3 g/10 min, mit einem Teil eines Polyäthylens mit einer Dichte von 0,947 g/cm³ und einem MFI (190/5) von 1,6 g/10 min gemischt und in ein Stranggranulat überführt. Man erhält die Kautschukmischung I, die einen MFI (230/5) von 2,2 g/10 min besitzt.

Auf die gleiche Weise erhält man die Kautschukmischung II für den Vergleichsversuch A aus 2 Teilen eines Äthylen-Propylen-Mischpolymerisats, bestehend aus 41 Gew.-% Äthylen-Einheiten und 59 Gew.-% Propylen-Einheiten, mit einem MFI (230/5) von 0,45 g/10 min und 1 Teil des obengenannten Polyäthylens. Der MFI (230/5) der Mischung ist 0,4 g/10 min. Jeweils 80 Teile eines Polypropylens mit

**0 006 620**

der Dichte 0,906 g/cm³ und dem MFI (230/5) von 8,9 g/10 min werden mit jeweils 20 Teilen der Kautschukmischung I und II vermischt und mittels eines Doppelschneckenextruders (D = 35, L = 17 D, 230°C, 70 Upmin) in ein Granulat überführt. Aus diesem Granulat werden Prüfkörper gepreßt und spritzgegossen. An diesen Prüfkörpern werden die in Tabelle 1 aufgeführten Eigenschaftswerte gemessen.

Die erfindungsgemäß hergestellte Formmasse (mit Kautschukmischung I) zeichnet sich somit durch eine verbesserte Härte als auch durch eine verbesserte Schlagfestigkeit bei allen Temperaturen aus.

### Beispiel 2 mit Vergleichsbeispiel B

Es werden die gleichen Kautschukmischungen I und II verwendet, jedoch werden je 20 Teile von ihnen mit je 80 Teilen eines Polypropylens mit der Dichte 0,903 g/cm³ und einem MFI (230/5) von 2,3 g/10 min unter den im Beispiel 1 angegebenen Bedingungen zu einem Granulat verarbeitet und die daraus hergestellten Prüfkörper untersucht. Es wurden die in Tabelle 2 aufgeführten Werte gemessen.

Dieses Mal erfüllt die Formmasse mit der Kautschukmischung II die erfindungsgemäßen Voraussetzungen und übertrifft in ihren mechanischen Eigenschaften, insbesondere in ihrer Kerbschlagzähigkeit bei Temperaturen unterhalb 0°C die andere Formmasse.

### Beispiel 3 mit Vergleichsbeispiel C

In einem Innenmischer werden 1 Teil eines Mischpolymerisats, bestehend aus 41 Gew.-% Äthyleneinheiten und 59 Gew.-% Propyleneinheiten mit einem MFI (230/5) von 0,45 g/10 min mit einem Teil eines Polyäthylens der Dichte 0,945 g/cm³ und einem MFI (190/5) von 0,3 bei 170°C 5 min vermischt. Die Masse wird auf einem beheizten Zweiwalzwerk zu einem Fell ausgezogen und anschließend in ein Würfelgranulat überführt. Diese Kautschukmischung III besitzt einen MFI (230/5) von 0,3 g/10 min.

80 Teile eines Polypropylens mit der Dichte von 0,903 g/cm³ und einem MFI (230/5) von 2,1 g/10 min werden mit 20 Teilen der Kautschukmischung III in der gleichen Weise wie in Beispiel 1 beschrieben gemischt und granuliert. Man erhält eine Formmasse a, welche die in Tabelle 3 angeführten Eigenschaften besitzt.

Mischt man hingegen die Kautschukmischung III in den gleichen Mengenverhältnissen unter gleichen Bedingungen mit einem Polypropylen mit der Dichte von 0,908 g/cm³ und dem MFI (230/5) von 18,7 g/10 min, so erhält man eine Formmasse b, die nicht den erfindungsgemäßen Bedingungen entspricht und demzufolge weniger gute Eigenschaften aufweist. Die Meßwerte sind ebenfalls in der Tabelle 3 angeführt ( = Vergleichsbeispiel C).

### Beispiel 4

Unter den Bedingungen des Beispiels 1 wird aus 6 Teilen eines Mischpolymerisats, bestehend aus 44 Gew.-% Äthyleneinheiten und 56 Gew.-% Propyleneinheiten (MFI (230/5) = 1,5 g/10 min) und 4 Teilen eines Polyäthylens mit einer Dichte von 0,947 g/cm³ und einem MFI (190/5) von 1,6 g/10 min eine Kautschukmischung IV hergestellt. Ihr MFI (230/5) ist 2,0 g/10 min.

Unter den gleichen Bedingungen wird auch eine Kautschukmischung V hergestellt. Sie entsteht aus 6 Teilen eines Äthylen-Propylen-Terpolymerisats, bestehend aus 70 Gew.-% Äthyleneinheiten, 24,4 Gew.-% Propyleneinheiten und 5,6 Gew.-% Äthylennorboneneinheiten, mit einem MFI von 0,1 g/10 min und 4 Teilen eines Polyäthylens mit einer Dichte von 0,948 g/cm³ und einem MFI (190/5) von 1,5 g/10 min. Ihr MFI (230/5) ist 0,2 g/10 min.

Je 90 Teile eines Polypropylens mit einer Dichte von 0,903 g/cm³ und einem MFI (230/5) von 9,5 g/10 min, welches 6,4 Gew.-% Äthyleneinheiten einpolymerisiert enthält, werden mit je 10 Teilen der Kautschukmischungen IV und V unter den Bedingungen des Beispiels 1 gemischt und in je eine granulierte Formmasse überführt. An den daraus hergestellten Prüfkörpern werden die in der Tabelle 4 angeführten Werte gemessen.

### Beispiel 5 mit Vergleichsbeispiel E

3 Teile eines Polyäthylens mit einer Dichte von 0,951 g/cm³ und einem MFI (190/5) von 0,15 g/10 min werden in dem Innenmischer gemäß Beispiel 3 mit 2 Teilen eines Mischpolymerisats bestehend aus 61 Gew.-% Äthyleneinheiten und 39 Gew.-% Propyleneinheiten, mit einer Dichte von 0,86 g/cm³ und einem MFI (230/5) von 0,22 g/10 min bei einer Temperatur von 180°C 4 min gemischt und anschließend granuliert. Der MFI dieser Kautschukmischung VI ist 0,52 g/10 min. Je 40 Teile dieser Kautschukmischung werden unter den Bedingungen des Beispiels 1 mit je 60 Teilen eines Polypropylens mit einer Dichte von 0,904 g/cm³ und einem MFI (230/5) von 2,7 g/10 min und eines Polypropylens mit einer Dichte von 0,907 g/cm³ und einem MFI (230/5) von 17,8 g/10 min gemischt und in granulierte Formmassen überführt. An den aus diesen Formmassen a und b hergestellten Prüfkörpern werden die in der Tabelle 5 aufgeführten Werte gemessen.

Tabelle 1

|  | Formmasse | |
|---|---|---|
|  | mit Kautschukmischung I | mit Kautschukmischung II (= Vergleichsversuch A) |
| MFI (230/5)-KM (Kautschukmischung) g/10 min | 2,2 | 0,4 |
| MFI (230/5)-PP g/10 min | 8,9 | 8,9 |
| $\dfrac{\text{MFI-PP}}{\text{MFI-KM}}$ | 4,05 | 22,3 |
| MFI (230/5) der Formmasse g/10 min | 6,6 | 7,3 |
| Kugeldruckhärte, N/mm² | 49,4 | 46,3 |
| Kerbschlagzähigkeit, mJ/mm² + 20°C 0°C − 20°C | 28,8 17,9 9,3 | 21,4 14,4 5,1 |

Tabelle 2

|  | Formmasse | |
|---|---|---|
|  | mit Kautschukmischung I (= Vergleichsbeispiel B) | mit Kautschukmischung II |
| MFI (230/5)-KM g/10 min | 2,2 | 0,4 |
| MFI (230/5)-PP g/10 min | 2,3 | 2,3 |
| $\dfrac{\text{MFI-PP}}{\text{MFI-KM}}$ | 1,04 | 5,75 |
| MFI (230/5) der Formmasse g/10 min | 2,6 | 2,9 |
| Kugeldruckhärte N/mm² | 40,5 | 43 |
| Kerbschlagzähigkeit, nJ/mm² + 20°C 0°C − 20°C − 40°C | 33 17,4 6,4 4,3 | 35 20,7 13,5 8,8 |

Tabelle 3

| | Formmasse | |
|---|---|---|
| | a | b<br>(= Vergleichsbeispiel C) |
| MFI (230/5)-KM<br>  g/10 min | 0,3 | 0,3 |
| MFI (230/5)-PP<br>  g/10 min | 2,1 | 18,7 |
| $\dfrac{\text{MFI-PP}}{\text{MFI-KM}}$ | 7,0 | 62,4 |
| MFI (230/5) der Formmasse<br>  g/10 min | 5,3 | 17,2 |
| Kugeldruckhärte, N/mm$^2$ | 45 | 50,4 |
| Kerbschlagzähigkeit, mJ/mm$^2$<br>  + 20°C<br>    0°C | 37,7<br>23,7 | 11,4<br>9,6 |
| Plattenfalltest, cm<br>    0°C<br> − 30°C | 140<br>100 | 105<br>50 |

| | Formmasse | |
|---|---|---|
| | mit<br>Kautschukmischung IV | mit<br>Kautschukmischung V<br>(= Vergleichsbeispiel D) |
| MFI (230/5)-KM<br>  g/10 min | 2,0 | 0,2 |
| MFI (230/5)-PP<br>  g/10 min | 9,5 | 9,5 |
| $\dfrac{\text{MFI-PP}}{\text{MFI-KM}}$ | 4,75 | 47,5 |
| MFI (230/5) der Formmasse<br>  g/10 min | 9,4 | 6,7 |
| Kugeldruckhärte, N/mm$^2$ | 51,2 | 50 |
| Kerbschlagzähigkeit, mJ/mm$^2$<br>  + 20°C<br>    0°C<br> − 20°C<br> − 40°C | 34,1<br>16,7<br>10,7<br>9,2 | 9,8<br>5,8<br>4,5<br>3,0 |

Tabelle 5

|  | Formmasse | |
|---|---|---|
|  | a | b<br>(= Vergleichsbeispiel E) |
| MFI (230/5)-KM<br>g/10 min | 0,52 | 0,52 |
| MFI (230/5)-PP<br>g/10 min | 2,7 | 17,8 |
| $\dfrac{\text{MFI-PP}}{\text{MFI-KM}}$ | 5,2 | 34,3 |
| Kugeldruckhärte, N/mm$^2$ | 63,5 | 61 |
| Plattenfalltest, cm<br>$\quad$ 0°C<br>$\quad - 30°C$<br>$\quad - 60°C$ | 135<br>110<br>80 | 110<br>60<br>15 |

**Patentansprüche**

1. Verfahren zum Herstellen einer Polypropylen-Formmasse bestehend aus 90 bis 60 Gew.-% Polypropylen, 4 bis 30 Gew.-% Polyäthylen und 6 bis 30 Gew.-% eines kautschukartigen Äthylen-Propylen-Mischpolymerisats, durch Mischen und Homogenisieren des Polyäthylens mit dem Äthylen-Propylen-Mischpolymerisat zu einer Kautschukmischung und anschließendes Mischen der Kautschukmischung mit dem Polypropylen und Granulieren, dadurch gekennzeichnet, daß man eine Kautschukmischung und ein Polypropylen miteinander mischt, deren Schmelzindices MFI (230/5)-KM und MFI (230/5)-PP im Verhältnis

$$\frac{\text{MFI (230/5)} - \text{PP}}{\text{MFI (230/5)} - \text{KM}} = 2 \text{ bis } 15$$

zueinander stehen.

2. Verfahren nach Anspruch 1, dadurch gekennzeichnet, daß das Verhältnis

$$\frac{\text{MFI (230/5)} - \text{PP}}{\text{MFI (230/5)} - \text{KM}} = 3 \text{ bis } 8$$

ist.

**Claims**

1. A process for the manufacture of a moldable polypropylene composition comprising 90 to 60% by weight of polypropylene, 4 to 30% by weight of polyethylene and 6 to 30% by weight of a rubber-elastic ethylene-propylene copolymer by mixing and homogenizing the polyethylene with the ethylene-propylene copolymer to give a rubber mixture, mixing the rubber mixture with the polypropylene with subsequent granulation, which comprises mixing a rubber mixture and a polypropylene, the melt indices MFI (230/5) of rubber mixture (RM) to MFI (230/5) of propylene (PP) of which are in a relation of

$$\frac{\text{MFI (230/5)} - \text{PP}}{\text{MFI (230/5)} - \text{RM}} = 2 \text{ to } 15.$$

0 006 620

2. The process of claim 1, wherein the relation

$$\frac{MFI\ (230/5) - PP}{MFI\ (230/5) - RM}$$

is from 3 to 8.

**Revendications**

1. Procédé de préparation d'une matière à mouler à base de polypropylène constituée de 90 à 60% en poids de polypropylène, de 4 à 30% en poids de polyéthylène et de 6 à 30% en poids d'un copolymère éthylène/propylène caoutchouteux, par mélangeage et homogénéisation du polyéthylène avec le copolymère éthylène/propylène de manière à obtenir un mélange caoutchouteux, puis mélangeage de ce dernier avec le polypropylène et granulation, procédé caractérisé en ce qu'on mélange l'un avec l'autre un mélange caoutchouteux et un polypropylène tel que l'indice de fusion MFI $(230/5)_{MC}$ du premier et l'indice de fusion MFI $(230/5)_{PP}$ du second soient dans le rapport suivant:

$$\frac{MFI\ (230/5)_{PP}}{MFI\ (230/5)_{MC}} = 2\ \text{à}\ 15.$$

2. Procédé selon la revendication 1 caractérisé en ce que les indices de fusion satisfont à la relation suivante:

$$\frac{MFI\ (230/5)_{PP}}{MFI\ (230/5)_{MC}} = 3\ \text{à}\ 8.$$

8